# EUROPÄISCHE PATENTSCHRIFT

(11) **EP 0 742 400 B1**
(45) Veröffentlichungstag und Bekanntmachung des Hinweises auf die Patenterteilung: **28.04.1999**
(21) Anmeldenummer: 96104028.4
(22) Anmeldetag: 14.03.1996
(51) Int. Cl.: F16L 11/22

(54) **Mehrfachschlauch für elektropneumatische Anwendungen**
Multiple hose for electro-pneumatic applications
Tuyau multiple pour applications électro-pneumatiques

(30) Priorität: 10.05.1995 DE 29507689 U
(43) Veröffentlichungstag der Anmeldung: 13.11.1996
(73) Patentinhaber: FESTO AG & Co, 73734 Esslingen (DE)
(72) Erfinder: Stoll, Kurt, Dr., 73732 Esslingen (DE)
(74) Vertreter: Abel, Martin, Dipl.-Ing.

(56) Entgegenhaltungen:
- DE-A- 4 227 464
- DE-U- 8 408 571
- GB-A- 2 258 513
- US-A- 4 273 070
- US-A- 4 399 319
- PATENT ABSTRACTS OF JAPAN vol. 006, no. 126 (M-142), 10.Juli 1982 & JP-A-57 053328 (TOYOTA MOTOR CORP), 30.März 1982,

## Beschreibung

Die Erfindung betrifft eine pneumatisch betätigbare Einrichtung, die zu ihrer Ansteuerung verwendete, an wenigstens ein elektrisches Kabel angeschlossene Sensoren aufweist und an die wenigstens zwei zur Zufuhr und/oder Abfuhr von Druckluft dienende Pneumatikschläuche eines Mehrfachschlauches angeschlossen sind, die entlang einer in Schlauchlängsrichtung verlaufenden Solltrennstelle trennbar aneinander befestigt sind und aus biegbarem Kunststoffmaterial bestehen, wobei der Mehrfachschlauch eine an den Pneumatikschläuchen angeordnete, in Schlauchlängsrichtung verlaufende Halteeinrichtung aufweist, an der das wenigstens eine, bezüglich dem Mehrfachschlauch separat ausgebildete elektrische Kabel gehalten ist.

Eine derartige pneumatisch betätigbare Einrichtung in Gestalt eines Arbeitszylinders geht aus DE-U-84 08 571 hervor. An den Arbeitszylinder sind zwei entlang einer Solltrennstelle trennbar miteinander verbundene Pneumatikschläuche angeschlossen, die Bestandteil eines Mehrfachschlauches sind. Desweiteren ist ein Sensor vorgesehen, der mit einem elektrischen Kabel verbunden ist. Es besteht ferner die Möglichkeit, den Mehrfachschlauch mit einer Halteeinrichtung zum Halten des elektrischen Kabels auszustatten, die aus zwei sich in Schlauchlängsrichtung erstreckenden, an jeweils einem Pneumatikschlauch angeordneten Klemmstegen besteht, so daß das elektrische Kabel zwischen den Klemmstegen gehalten werden kann.

Um einen sicheren Halt des elektrischen Kabels zu gewährleisten, müssen die Klemmstege eine gewisse Steifigkeit aufweisen. Dies beeinträchtigt allerdings das Biegeverhalten des Mehrfachschlauches, so daß seine Verlegbarkeit leidet. Beim Auftrennen der Pneumatikschläuche geht die Haltefunktion der Halteeinrichtung verloren.

Um das vorgenannte Problem zu umgehen, wird in der DE-U-84 08 571 bereits vorgeschlagen, auf eine besondere Halteeinrichtung zu verzichten und das elektrische Kabel unmittelbar an die Pneumatikschläuche anzukleben. Dies hat allerdings den Nachteil, daß sich die Haltefunktion nur ein einziges Mal ausnutzen läßt. Ist beispielsweise ein defektbedingter Austausch des elektrischen Kabels erforderlich, so ist es vollständig von den Pneumatikschläuchen abzuziehen und das Ersatzkabel kann nurmehr auf konventionelle Weise unter Zuhilfenahme üblicher Schlauchbänder fixiert werden.

Es ist die Aufgabe der vorliegenden Erfindung, eine pneumatisch betätigbare Einrichtung der eingangs genannten Art zu schaffen, deren zum Anschließen der Einrichtung dienender Mehrfachschlauch eine zuverlässige Fixierung elektrischer Kabel ermöglicht, ohne seine Biegbarkeit insgesamt in relevanter Weise zu beeinträchtigen.

Zur Lösung dieser Aufgabe ist vorgesehen, daß die Halteeinrichtung von wenigstens einem aus biegbarem Kunststoffmaterial bestehenden Kabelschlauch gebildet ist, in dem das wenigstens eine elektrische Kabel für die Sensoren verläuft und der entlang wenigstens einer in Schlauchlängsrichtung verlaufenden Solltrennstelle trennbar an den Pneumatikschläuchen befestigt ist.

Auf diese Weise ist das in den Kabelschlauch eingezogene elektrische Kabel ungeachtet dem Verlegeverlauf des Mehrfachschlauches sicher gehalten, selbst bei stark abgebogenem Verlegeverlauf. Dabei kann der Kabelschlauch wegen seiner geringen Belastung verhältnismäßig dünnwandig ausgelegt werden, so daß der Mehrfachschlauch insgesamt eine gute Biegbarkeit aufweist und sehr flexibel verlegt werden kann. Die Handhabung ist dadurch sehr einfach. Im Falle eines Defektes eines eingezogenen Kabels ist ein problemloser Kabelaustausch möglich, ohne die Haltefunktion zu verlieren. Die Anbringung unter Vermittlung einer Solltrennstelle ermöglicht es, die Schläuche an ihren Endbereichen beliebig weit von einander abzuziehen und dadurch an Ort und Stelle unabhängig voneinander zu verlegen, wobei gleichzeitig Übersichtlichkeit und Ordnung gewahrt bleiben.

Vorteilhafte Weiterbildungen der Erfindung gehen aus den Unteransprüchen hervor.

Bevorzugt ist der Mehrfachschlauch als Dreifachschlauch ausgebildet, der über zwei Pneumatikschläuche und einen Kabelschlauch verfügt. Dabei ist die Anordnung zweckmäßigerweise derart getroffen, daß der Kabelschlauch im Verbindungsbereich der beiden Pneumatikschläuche verläuft, so daß sich im Querschnitt gesehen eine Art Dreiecksanordnung ergibt, die nach allen Seiten eine gute Biegbarkeit gewährleistet.

Bevorzugt verfügen alle vorhandenen Schläuche über einen kreisrunden Querschnitt.

Der Mehrfachschlauch kann besonders einfach durch Kunststoff-Extrusion hergestellt werden, so daß er als Extrusionsteil beliebiger Länge vorliegt, das von Fall zu Fall auf das gewünschte Maß abgelängt wird.

Sollte im Verlauf des Kabelschlauches ein Kabelaustritt erforderlich sein, läßt sich dort beliebig mit einem geeigneten Schneidwerkzeug eine Öffnung anbringen und das betreffende Kabel herausführen. Im übrigen können alle vorhandenen Schläuche endseitig insbesondere nach einem vorgeschalteten Trennvorgang dem Einsatzzweck entsprechend unabhängig voneinander gekürzt werden.

Nachfolgend wird die Erfindung anhand der beiliegenden Zeichnung näher erläutert. In dieser zeigen:
- Figur 1: eine bevorzugte Bauform des erfindungsgemäßen Mehrfachschlauches im Einsatz, schematisch dargestellt,
- Figur 2: den einen axialen Endbereich des bei der Anwendung gemäß Figur 1 verwendeten Mehrfachschlauches in Einzeldarstellung,
- Figur 3: einen Querschnitt durch den Mehrfachschlauch aus Figur 1 ohne Darstellung der im Kabelschlauch verlaufenden elektrischen Kabel gemäß Schnittlinie III-III, und
- Figuren 4 und 5: Querschnitte weiterer Ausführungsformen des Mehrfachschlauches.

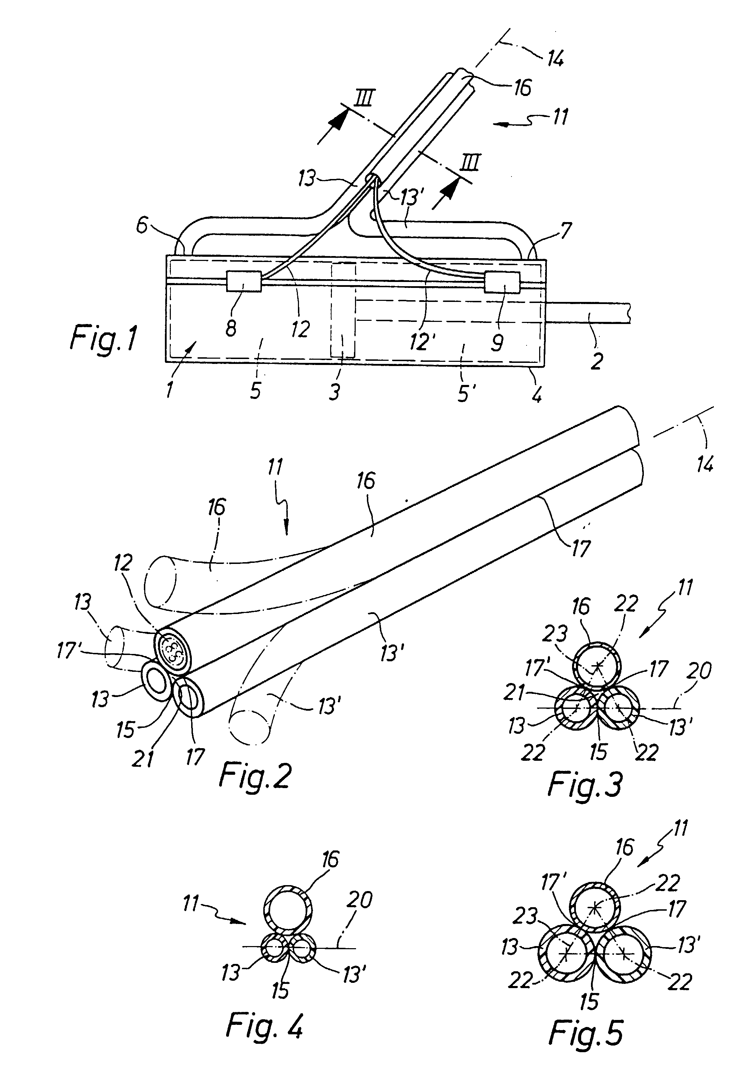

In Figur 1 ist schematisch eine pneumatisch betätigbare Einrichtung in Gestalt eines Arbeitszylinders 1 angedeutet. Der Arbeitszylinder 1 hat in an sich bekannter Weise eine Kolbenstange 2, die mit einem Kolben 3 verbunden ist, der im Innern des Zylindergehäuses 4 zwei Arbeitsräume 5, 5' voneinander abteilt. Jedem Arbeitsraum 5, 5' ist ein Anschluß 6, 7 zugeordnet, über den Druckluft eingespeist oder abgeführt wird, um den Kolben 3 und die Kolbenstange 2 zu verlagern.

Außen am Zylindergehäuse 2 befinden sich ferner zwei Sensoren 8, 9, die auf den Kolben 3 ansprechen und zu dessen Positionserfassung eingesetzt werden.

Unter Verwendung des Mehrfachschlauches 11 ist der Arbeitszylinder 1 sowohl pneumatisch als auch elektrisch angeschlossen. Der Mehrfachschlauch 11 dient gleichzeitig zur Zuund/oder Abfuhr des Betätigungsfluides sowie zur Unterstützung der Verlegung elektrischer Kabel 12, 12', die für den Betrieb der Sensoren 8, 9 benötigt werden. Es handelt sich mithin um einen Mehrfachschlauch für elektro-pneumatische Anwendungen.

Im Detail betrachtet umfaßt der beispielsgemäße Mehrfachschlauch 11 zwei aus biegbarem Kunststoffmaterial, beispielsweise Polyurethanmaterial, bestehende Pneumatikschläuche 13, 13', die entlang einer in Schlauchlängsrichtung verlaufenden Solltrennstelle 15 leicht trennbar miteinander verbunden sind und eine Einheit darstellen. Die beiden Pneumatikschläuche 13, 13' sind bevorzugt identisch ausgebildet.

Zusätzlich umfaßt der beispielsgemäße Mehrfachschlauch 11 einen ebenfalls aus biegsamem flexiblem Kunststoffmaterial bestehenden Kabelschlauch 16, der die gleiche Länge hat wie die Pneumatikschläuche 13, 13' und parallel zu diesen verläuft.

Sämtliche Schläuche 13, 13', 16 sind längsseits aneinandergesetzt und zu einem Schlauchpaket vereinigt. Der Kabelschlauch 16 ist hierbei über weitere Solltrennstellen 17, 17' mit den beiden Pneumatikschläuchen 13, 13' trennbar verbunden. Sämtliche Solltrennstellen 15, 17, 17' verlaufen parallel zueinander in Schlauchlängsrichtung 14.

Der Kabelschlauch 16 dient zur Aufnahme und Führung der bereits erwähnten elektrischen Kabel 12, 12'. Diese Elektrokabel 12, 12' sind nach der Herstellung des Mehrfachschlauches 11 in den Kabelschlauch 16 eingezogen worden, so daß sie parallel zu den Pneumatikschläuchen 13, 13' verlaufen.

Somit läßt sich mit Hilfe des Mehrfachschlauches 11 sowohl die pneumatische als auch die elektrische Versorgung des Arbeitszylinders 1 bzw. jedweder anderen pneumatisch betätigbaren Einrichtung bewerkstelligen. Der Mehrfachschlauch 11 läßt sich in einem Strang an den Arbeitszylinder 1 heranführen, um in unmittelbarer Nähe desselben in seine einzelnen Schläuche 13, 13', 16 aufgetrennt zu werden, um auf diese Weise die Verbindung zu den Anschlüssen 6, 7 bzw. den Sensoren 8, 9 vorzunehmen. Das Auftrennen des Schlauchpaketes bzw. Schlauchbündels geschieht entlang den Solltrennstellen 15, 17, 17', so daß die Schläuche nicht beschädigt werden. Nachdem die Verbindungen an den Solltrennstellen 15, 17, 17' aufgelöst wurden, lassen sich die einzelnen Schläuche ohne weiteres noch einzeln und unabhängig voneinander ablängen, um eine Anpassung an die örtlichen Gegebenheiten vorzunehmen. Bei der Anwendung gemäß Figur 1 sind die beiden Pneumatikschläuche 13, 13' annähernd gleich lang, während der Kabelschlauch 16 erheblich verkürzt wurde, um die Aufteilung der eingezogenen elektrischen Kabel 12, 12' zu erleichtern.

In Figur 2 ist der Mehrfachschlauch 11 im ungetrennten Zustand dargestellt. In strichpunktierten Linien ist angedeutet, wie sich die Schläuche an den Solltrennstellen, beginnend von einer Stirnseite, voneinander wegreißen lassen.

Obgleich die Anzahl der verwendeten Pneumatikschläuche und Kabelschläuche prinzipiell beliebig ist, hat sich eine Ausgestaltung als Dreifachschlauch, wie sie beim Ausführungsbeispiel zum Einsatz kommt, als besonders empfehlenswert erwiesen. Ein solcher Dreifachschlauch ermöglicht kompakte Abmessungen bei guter Biegbarkeit in allen Richtungen.

Allen Ausführungsbeispielen ist gemeinsam, daß die Pneumatikschläuche 13, 13' einen kreisrunden Querschnitt aufweisen und auch in ihren Querschnittsabmessungen vorzugsweise identisch sind. Die Solltrennstelle 15 ist linienförmig und liegt in einer die beiden Zentren der Pneumatikschläuche 13, 13' verbindenden Ebene 20. Betrachtet man nur die beiden Pneumatikschläuche 13, 13' so ergibt sich eine Außenkontur, die im Bereich der den Verbindungsbereich markierenden Solltrennstelle 15 über eine in Längsrichtung durchgehende Einschnürung verfügt.

Der Kabelschlauch 16 ist in diesem vorgenannten Verbindungsbereich der beiden Pneumatikschläuche 13, 13' angeordnet. Die Außenkontur der Pneumatikschlauch-Anordnung hat hier eine durch die Verjüngung bedingte Vertiefung, in der der Kabelschlauch 16 einliegt, so daß er mit jedem Pneumatikschlauch 13, 13' in linienartiger Berührung steht. An diesen Berührbereichen sind die erwähnten weiteren Solltrennstellen 17, 17' ausgebildet, so daß der Kabelschlauch 16 mit jedem Pneumatikschlauch 13, 13' über eine eigene Solltrennstelle 17, 17' verbunden ist. Insgesamt sind somit drei Solltrennstellen 15, 17, 17' vorhanden, wobei jeder Schlauch mit jedem der beiden anderen Schläuche über eine derartige linienförmige Solltrennstelle fest verbunden ist.

Auch der Kabelschlauch 16 ist bevorzugt kreisrund konturiert. Die zwischen den Solltrennstellen 15, 17, 17' verlaufenden Außenumfangsabschnitte der drei Schläuche 13, 13', 16 begrenzen einen in Schlauchlängsrichtung 14 durchgehenden kanalartigen Zwischenraum 21.

Prinzipiell könnten die Schläuche 13, 13', 16 entlang den Solltrennstellen abreißbar miteinander verklebt sein. Bei dem Mehrfachschlauch 11 des Ausführungsbeispieles sind die vorhandenen Schläuche hingegen einstückig miteinander verbunden, wobei die Verbindung dadurch erzielt wird, daß man den Mehrfachschlauch 11 als einstückiges Extrusionsteil herstellt. Ein derartiges Extrusionsteil läßt sich in Meterware mit beliebiger Länge herstellen, so daß es später für den gewünschten Einsatzzweck lediglich noch bedarfsgemäß abzulängen ist.

Die Wandstärke der Pneumatikschläuche 13, 13' ist dem geplanten Betriebsdruck entsprechend ausgeführt. Da der Kabelschlauch 16 keinen Druckbelastungen ausgesetzt ist, kann er über eine dünnere Wandstärke verfügen, was den Vorteil mit sich bringt, daß er die Biegsamkeit des Mehrfachschlauches 11 kaum nachteilig beeinflußt.

Der Kabelschlauch 16 fungiert als Halteeinrichtung für die in ihm verlaufenden elektrischen Kabel 12, 12'. Da er diese Kabel vollständig umschließt, übt er gleichzeitig noch eine Schutzfunktion aus und schützt die empfindlichen Kabel vor Beschädigung.

Wie aus Figuren 3 bis 5 hervorgeht, sind die Schläuche 13, 13', 16 bevorzugt derart angeordnet, daß die Schlauchzentren bzw. Mittelpunkte 22 in den Eckenbereichen eines gedachten, in Figur 5 gleichseitigen und in Figur 3 gleichschenkligen Dreieckes 23 liegt.

Die Figur 3 zeigt eine Ausführungsform, bei der der Außendurchmesser des Kabelschlauches 16 geringfügig größer ist als der Außendurchmesser der Pneumatikschläuche 13, 13'. In Figur 5 ist der Außendurchmesser des Kabelschlauches 16 geringfügig kleiner. Beim Ausführungsbeispiel gemäß Figur 4 letztlich ist der Querschnitt des Kabelschlauches 16 erheblich größer als derjenige der Pneumatikschläuche 13, 13', wobei die in der Ebene 20 gemessene Breite der Pneumatikschlauch-Anordnung nur geringfügig größer ist als der Außendurchmesser des Kabelschlauches 16.

Bei dem gezeigten Anwendungsfall gemäß Figur 1 verlaufen in dem Kabelschlauch 16 zwei separate elektrische Kabel 12, 12', die vorzugsweise jeweils mehradrig ausgeführt sind. Es kann sich insbesondere jeweils um zweiadrige Kabel handeln, über die der Anschluß eines jeweiligen Sensors 8, 9 erfolgt.

In Figur 2 ist strichpunktiert lediglich ein in den Kabelschlauch 16 eingezogenes elektrisches Kabel gezeigt, bei dem es sich um ein vieradriges Kabel handelt. Die einzelnen Kabel verfügen jeweils über eine oder mehrere Adern bzw. Leiter, die von einem isolierenden Kunststoffmantel umgeben sind.

Da die elektrischen Kabel 12, 12' beim Ausführungsbeispiel nur lose in den Kabelschlauch 16 eingezogen sind, lassen sie sich im Defektfalle leicht auswechseln.

## Patentansprüche

1. Pneumatisch betätigbare Einrichtung, die zu ihrer Ansteuerung verwendete, an wenigstens ein elektrisches Kabel (12,12') angeschlossene Sensoren (8,9) aufweist und an die wenigstens zwei zur Zufuhr und/oder Abfuhr von Druckluft dienende Pneumatikschläuche (13,13') eines Mehrfachschlauches (11) angeschlossen sind, die entlang einer in Schlauchlängsrichtung (14) verlaufenden Solltrennstelle (15) trennbar aneinander befestigt sind und aus biegbarem Kunststoffmaterial bestehen, wobei der Mehrfachschlauch (11) eine an den Pneumatikschläuchen (13,13') angeordnete, in Schlauchlängsrichtung (14) verlaufende Halteeinrichtung aufweist, an der das wenigstens eine, bezüglich dem Mehrfachschlauch (11) separat ausgebildete elektrische Kabel (12,12') gehalten ist, dadurch gekennzeichnet, daß die Halteeinrichtung von wenigstens einem aus biegbarem Kunststoffmaterial bestehenden kabelschlauch (16) gebild t ist, in dem das wenigstens eine elektrische Kabel (12,12') für die Sensoren (8, 9) verläuft und der entlang wenigstens einer in Schlauchlängsrichtung (14) verlaufenden Solltrennstelle (17,17') trennbar an den Pneumatikschläuchen (13 bzw. 13') befestigt ist.

2. Pneumatisch betätigbare Einrichtung nach Anspruch 1, dadurch gekennzeichnet, daß zwei Pneumatikschläuche (13,13') und ein Kabelschlauch (16) über insgesamt drei Solltrennstellen (15,17,17') miteinander verbunden sind, wobei die zwischen den Solltrennstellen (15,17,17') verlaufenden Außenumfangsabschnitte der drei Schläuche (13,13',16) einen in Schlauchlängsrichtung (14) durchgehenden kanalartigen Zwischenraum (21) definieren.

3. Pneumatisch betätigbare Einrichtung nach einem der Ansprüche 1 bis 2, dadurch gekennzeichnet, daß der Mehrfachschlauch als Dreifachschlauch bestehend aus zwei Pneumatikschläuchen (13,13') und einem Kabelschlauch (16) ausgebildet ist.

4. Pneumatisch betätigbare Einrichtung nach Anspruch 3, dadurch gekennzeichnet, daß die Schläuche (13,13',16) derart angeordnet sind, daß ihre Schlauchzentren (22) zumindest im wesentlichen in den Eckenbereichen eines gleichschenkligen oder gleichseitigen Dreiecks (23) liegen.

5. Pneumatisch betätigbare Einrichtung nach einem der Ansprüche 1 bis 4, dadurch gekennzeichnet, daß die Schläuche (13,13',16) entlang der Solltrennstellen (15,17,17') einstückig miteinander verbunden sind.

6. Pneumatisch betätigbare Einrichtung nach einem der Ansprüche 1 bis 5, dadurch gekennzeichnet, daß der Mehrfachschlauch als einstückiges Extrusionsteil ausgebildet ist.

7. Pneumatisch betätigbare Einrichtung nach einem der Ansprüche 1 bis 4, dadurch gekennzeichnet, daß die Schläuche (13,13',16) an den Solltrennstellen (15,17,17') miteinander verklebt sind.

8. Pneumatisch betätigbare Einrichtung nach einem der Ansprüche 1 bis 7, dadurch gekennzeichnet, daß alle Schläuche (13,13',16) einen kreisrunden Querschnitt aufweisen.

9. Pneumatisch betätigbare Einrichtung nach einem der Ansprüche 1 bis 8, dadurch gekennzeichnet, daß der Kabelschlauch (16) eine dünnere Wandstärke als die Pneumatikschläuche (13,13') aufweist.

10. Pneumatisch betätigbare Einrichtung nach einem der Ansprüche 1 bis 9, dadurch gekennzeichnet, daß in dem Kabelschlauch (16) wenigstens ein als mehradriges Elektrokabel ausgeführtes elektrisches Kabel (12,12') verläuft.

11. Pneumatisch betätigbare Einrichtung nach Anspruch 10, dadurch gekennzeichnet, daß in den Kabelschlauch ein vieradriges oder zwei zweiadrige Kabel (12,12') eingezogen sind.

12. Pneumatisch betätigbare Einrichtung nach einem der Ansprüche 1 bis 11, gekennzeichnet durch eine Ausgestaltung als Arbeitszylinder.

## Claims

1. Pneumatically operable device equipped with sensors (8, 9) connected to at least one electrical cable (12, 12') for its activation and connected to at least two pneumatic hoses (13, 13') of a multiple hose (11) for the supply and/or exhaustion of compressed air, said hoses being separably attached to each other along a nominal position of separation (15) extending along the axial direction (14) of the hoses and made of a flexible plastic material, the multiple hose (11) being provided with a holding device located on the pneumatic hoses (13, 13') and extending in the axial direction (14) of the hoses for the at least one electrical cable (12, 12'), which is separated from the multiple hose (11), characterized in that the holding device is represented by at least one cable conduit (16) made of a flexible plastic material, in which the at least one electrical cable (12, 12') for the sensors (8, 9) runs and which is separably attached to the pneumatic hoses (13 or 13') along a nominal position of separation (17, 17') extending in the axial direction (14) of the hoses.

2. Pneumatically operable device according to claim 1, characterized in that two pneumatic hoses (13, 13') and a cable conduit (16) are attached to each other by means of a total of three nominal positions of separation (15, 17, 17'), the external circumferential sections of the three hoses/conduits (13, 13', 16) located between the nominal positions of separation (15, 17, 17') defining a continuous channel-like gap (21) extending in the axial direction (14) of the hoses.

3. Pneumatically operable device according to any of claims 1 to 2, characterized in that the multiple hose is designed as a triple hose consisting of two pneumatic hoses (13, 13') and a cable conduit (16).

4. Pneumatically operable device according to claim 3, characterized in that the hoses/conduit (13, 13', 16) are so arranged that their centres (22) are located at least substantially in the corner areas of an equilateral triangle (23).

5. Pneumatically operable device according to any of claims 1 to 4, characterized in that the hoses/conduit (13, 13', 16) are integrally attached to each other along the nominal positions of separation (15, 17, 17').

6. Pneumatically operable device according to any of claims 1 to 5, characterized in that the multiple hose is designed as a single extruded part.

7. Pneumatically operable device according to any of claims 1 to 4, characterized in that the hoses/conduit (13, 13' 16) are bonded to each other at the nominal positions of separation (15, 17, 17').

8. Pneumatically operable device according to any of claims 1 to 7, characterized in that the hoses/conduit (13, 13', 16) have a circular cross-section.

9. Pneumatically operable device according to any of claims 1 to 8, characterized in that the cable conduit (16) has a lesser wall thickness than the pneumatic hoses (13, 13').

10. Pneumatically operable device according to any of claims 1 to 9, characterized in that at least one electrical cable (12, 12') designed as a multi-core cable runs in the cable conduit (16).

11. Pneumatically operable device according to claim 10, characterized in that one four-core cable or two two-core cables (12, 12') is/are installed in the cable conduit.

12. Pneumatically operable device according to any of claims 1 to 11, characterized in that it is designed as an operating cylinder.

## Revendications

1. Dispositif actionnable pneumatiquement qui comporte des capteurs (8, 9) utilisés pour sa commande, raccordés à au moins un câble électrique (12, 12') et auxquels sont raccordés au moins deux tuyaux pneumatiques (13, 13') servant à l'amenée et/ou à l'évacuation d'air comprimé, faisant partie d'un tuyau multiple (11), qui sont fixés l'un à l'autre de manière séparable le long d'un emplacement destiné à la séparation (15), s'étendant dans la direction longitudinale (14) du tuyau et qui sont constitués d'une matière plastique souple, le tuyau multiple (11) comportant un dispositif de maintien disposé sur les tuyaux pneumatiques (13, 13'), s'étendant dans la direction longitudinale (14) du tuyau, sur lequel dispositif de maintien sont maintenus le ou les câbles électriques (12, 12') réalisés séparément du tuyau multiple (11), caractérisé en ce que le dispositif de maintien est constitué d'au moins un tuyau pour câble (16) réalisé dans une matière plastique souple, dans lequel s'étend(ent) le ou les câble(s) électrique(s) (12, 12') pour les capteurs (8, 9) et qui est fixé de manière séparable aux tuyaux pneumatiques (13 ou 13'), le long d'au moins un emplacement destiné à la séparation (17, 17') s'étendant dans la direction longitudinale (14) du tuyau.

2. Dispositif actionnable pneumatiquement selon la revendication 1, caractérisé en ce que deux tuyaux pneumatiques (13, 13') et un tuyau pour câbles (16) sont reliés entre eux par au total trois emplacements destinés à la séparation (15, 17, 17'), les portions de pourtour extérieur des trois tuyaux (13, 13', 16), s'étendant entre les points destinés à la séparation (15, 17, 17'), définissant un espace intermédiaire (21) du genre canal, s'étendant d'un bout à l'autre dans la direction longitudinale (14) du tuyau.

3. Dispositif actionnable pneumatiquement selon l'une des revendications 1 ou 2, caractérisé en ce que le tuyau multiple est réalisé en tant que tuyau triple constitué de deux tuyaux pneumatiques (13, 13') et d'un tuyau pour câbles (16).

4. Dispositif actionnable pneumatiquement selon la revendication 3, caractérisé en ce que les tuyaux (13, 13', 16) sont disposés de manière que leurs centres de tuyau (22) se situent au moins sensiblement dans les zones d'angle d'un triangle (23) isocèle ou équilatéral.

5. Dispositif actionnable pneumatiquement selon l'une des revendications 1 à 4, caractérisé en ce que les tuyaux (13, 13', 16) sont assemblés entre eux d'une seule pièce le long de leurs emplacements destinés à la séparation (15, 17, 17').

6. Dispositif actionnable pneumatiquement selon l'une des revendications 1 à 5, caractérisé en ce que le tuyau multiple est réalisé en tant qu'élément extrudé d'une seule pièce.

7. Dispositif actionnable pneumatiquement selon l'une des revendications 1 à 4, caractérisé en ce que les tuyaux (13, 13', 16) sont collés entre eux aux emplacements destinés à la séparation (15, 17, 17').

8. Dispositif actionnable pneumatiquement selon l'une des revendications 1 à 7, caractérisé en ce que tous les tuyaux (13, 13', 16) présentent une section circulaire.

9. Dispositif actionnable pneumatiquement selon l'une des revendications 1 à 8, caractérisé en ce que le tuyau pour câbles (16) présente une épaisseur de paroi plus mince que les tuyaux pneumatiques (13, 13').

10. Dispositif actionnable pneumatiquement selon l'une des revendications 1 à 9, caractérisé en ce que dans le tuyau pour câbles (16) s'étend au moins un câble électrique (12, 12') réalisé en tant que câble électrique à plusieurs conducteurs.

11. Dispositif actionnable pneumatiquement selon la revendication 10, caractérisé en ce que dans le tuyau pour câbles passent un câble à quatre conducteurs ou deux câbles à deux conducteurs (12, 12').

12. Dispositif actionnable pneumatiquement selon l'une des revendications 1 à 11, caractérisé par une réalisation de ce dispositif en tant que vérin.
